# EUROPEAN PATENT SPECIFICATION

(11) **EP 0 652 275 B1**
(45) Date of publication and mention of the grant of the patent: **02.12.1998**
(21) Application number: 94307363.5
(22) Date of filing: 06.10.1994
(51) Int. Cl.: C10B 53/00, B01J 8/00, C10B 33/02

(54) **Reactor and method for producing oil from shredded tyres**
Reaktor und Verfahren zur Herstellung von Öl aus zerkleinerten Reifen
Réacteur et procédé pour la production d'huile à partir de pneumatiques fragmentés

(30) Priority: 28.10.1993 US 142012
(43) Date of publication of application: 10.05.1995
(73) Proprietor: TEXACO DEVELOPMENT CORPORATION, White Plains, New York 10650 (US)
(72) Inventor: Avetisian, Vahan, Burbank, CA 91505 (US); Bugescu, Constantin, La Habra Hts. CA.90631 (US); Burton, Robert Stanley III, Simi Valley CA 93065 (US); Castagnoli, Craig Joseph, Rowland Heights, CA 91748 (US); Cha, Suk-Bae, Long Beach, CA 90803 (US); Lee, Kenneth Scott, Rowland Heights, CA 91748 (US); Robin, Allen Maurice, Anaheim, CA 92806 (US)
(74) Representative: Ben-Nathan, Laurence Albert

(56) References cited:
- EP-A- 0 019 389
- EP-A- 0 126 407
- DE-A- 3 814 463
- US-A- 5 070 109

## Description

### BACKGROUND OF THE INVENTION

### Field of the Invention

The present invention relates to reactors in general and, more particularly, to a reactor for a tyre liquefaction process in which shredded tyres and oil are reacted together to provide tyre oil.

### Prior Art

US-A-5,070,109 relates to the recovery of hydrocarbon products from elastomeric products, such as vehicle tyres by a batch process treatment thereof. A reactor vessel, which is provided with heating means, has a loading chamber with top and bottom openable hatches and means for opening the bottom hatch to load products to be treated into the reactor. The reactor contains a bath of a hydrocarbon liquid heat transfer medium maintained at an elevated temperature. Pieces of tyre are loaded into a wire mesh basket provided in the hot liquid bath and are subjected to thermal cracking therein. Hot hydrocarbon gases are vented from the top of the reactor. After the process is completed, heavy liquid separated from the tyre is run off from the bottom of the reactor and the basket containing pieces of steel cord from the tyres, is then separately removed therefrom.

EP-A-0 019 389 describes pyrolysing shredded tyres in which residues are removed by a plurality of screw devices inclined at an angle.

### SUMMARY OF THE INVENTION

The object of the invention is to provide an improved method and apparatus for treating shredded tyres to produce tyre oil, which facilitates removal of the separated, unreacted components from the reactor.

The invention provides a tyre oil reactor which reacts shredded tyres and oil to produce tyre oil, comprising:
(a) first inlet means for receiving shredded tyres;
(b) second inlet means for receiving oil;
(c) heating means for heating the inside of the reactor to a temperature sufficient to cause a reaction between the shredded tyres and the oil to produce tyre oil;
(d) separating means located within the reactor for separating unreacted components of the shredded tyres from the tyre oil;
(e) discharge means for discharging the tyre oil from the reactor; and
(f) removal means for removing the unreacted components from the reactor, which comprises
   a substantially horizontal first conduit means affixed to the reactor;
   a substantially vertical second conduit means connected to the first conduit means;
   a first screw auger means, having a portion located within the reactor and the remaining portion within the first conduit means, for moving the unreacted components from the reactor through the first conduit to the second conduit;
   a first motor means connected to the first screw auger means for driving the first screw auger means so as to remove unreacted components from the reactor;
   a second screw auger means located within the second conduit means for preventing binding of the unreacted components exiting the first conduit means and for moving the unreacted components so as to discharge the unreacted components; and
   a second motor means connected to the second screw auger means for driving the second screw auger means.

The invention also provides a tyre oil reaction method which reacts shredded tyres and oil to produce tyre oil comprising the steps of:
introducing shredded tyres into a reactor;
introducing oil into the reactor;
heating the inside of the reactor to a temperature sufficient to cause a reaction between the shredded tyres and the oil to produce tyre oil;
separating unreacted components of the shredded tyres from the tyre oil within the reactor;
discharging the tyre oil from the reactor; and
removing the unreacted components from the reactor by using a first screw auger means in a substantially horizontal first conduit means to move the unreacted components from the reactor through the first conduit means and through a substantially vertical second conduit means connected to the first conduit means and containing a second screw auger means.

The objects and advantages of the invention will appear more fully hereinafter, from a consideration of the detailed description which follows, taken together with the accompanying drawings, wherein one embodiment is illustrated by way of example. It is to be expressly understood, however, that the drawings are for illustrative purposes only and not to be construed as defining the limits of the invention.

### DESCRIPTION OF THE DRAWINGS

Fig. 1 is a diagrammatic central section view of a reactor, constructed in accordance with the present invention, taken along the line 1-1 of Fig. 2.

Fig. 2 is a diagrammatic central section view taken along line 2-2 of Fig. 1.

Fig. 3 is a cut away representative of the screens mounted internally in the reactor.

### DESCRIPTION OF THE INVENTION

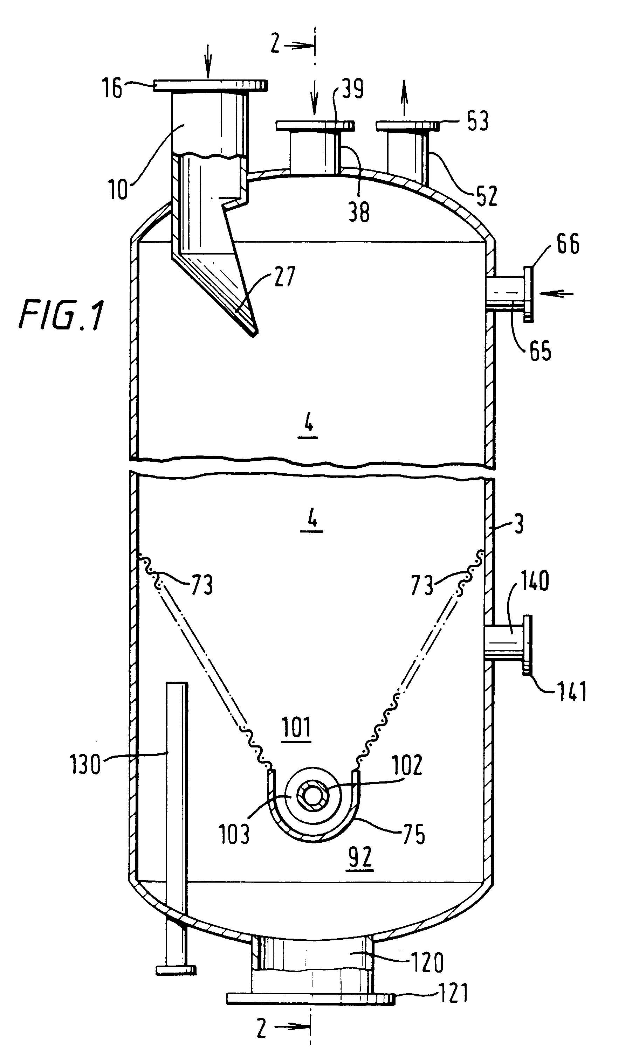

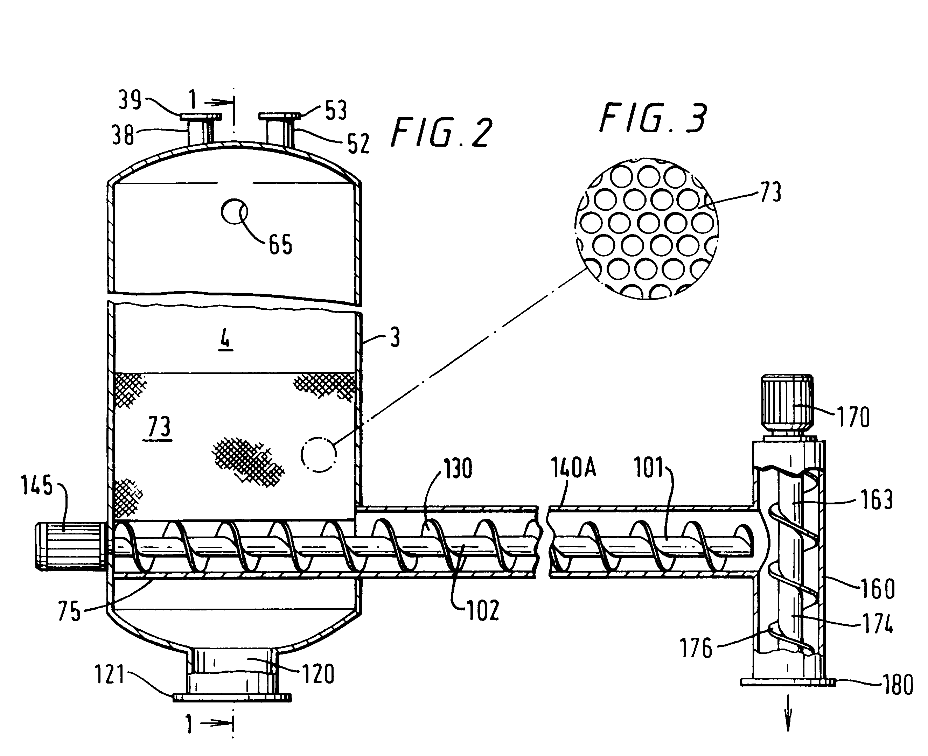

Shown in Figs. 1 and 2 is a reactor 3 which is used to react tyres and liquid oil, generally in the form of waste oil, to convert the non-metal components of the shredded tyres to tyre oil in a process described and disclosed in US-A-5 364 996. Many of the shredded tyres, if not all of the shredded tyres, will have pieces of metal in them, either from the steel belt, in the steel belted radial-type tyres, or from the beading around the edge of the tyres. These metal components, as well as some other components, are not converted to tyre oil.

Reactor 3 has an entrance port 10 with flanged portion for connection to other pipes 16. A deflection plate 27 is also associated with the port 10 so that as the shredded tyres enter the reactor 3, they are directed towards the center of the reactor 3. Also shown is a port 38 with a flanged connection 39 for the insertion of a mixer which is used to mix the shredded tyre and oil. Another port 52 with a flange connection 53 is used to draw off any gas that develops in the process.

Further, there is shown an injection port 65 with flange connection 66 where oil used in the reaction process is injected into chamber 4. Internally, the reactor is divided into an upper section 4 and a lower section 92 by two screens 73, which are connected to each other by an arcuate bottom element 75.

Screens 73 are made of plate metal. Fig. 3 shows a cut away portion of screen 73 to the hole arrangement. In one example, each hole is approximately 1.27 mm (½ inch) in diameter.

There is also located within the upper section 4 of the reactor screw auger means 101 having a shaft 102 with a spiral wound blade 103. Screw auger means 101 will be described more fully hereinafter along with its cooperation with screens 73 and bottom element 75.

Also shown in Fig. 1 is a bottom port 120 with a flange connection 121. Further, there is shown as entering into chamber 92, a conventional-type emersion heater 130. A draw-off port 140 with a flange connection 141, is also provided.

A horizontal conduit 140A is connected to the reactor 3. The screw auger means 101 has an end section disposed within the arcuate bottom element 75 which acts as a collection trough for metal elements separated by the screens 73 from the shredded tyres. The screw auger means 101 extends therefrom through the conduit 104A. Motor means 145 rotates auger screw means 101 so as to move the metal that has separated from the tyre shreds, out of the reactor 3 for discharge. The metal is carried along conduit 140A by auger screw means 101 until it encounters a vertical conduit 160 having a vertically arranged auger screw means 163. Auger screw means 163 is rotated by a motor 170. Auger screw means 163 like auger screw means 101 has a shaft 174 with a spiral blade 176. Auger screw means 163 extends to the end of conduit 160 which has a mounted flange 180. Material carried from the reactor 3 is discharged from the system through conduit 160.

## Claims

1. A tyre oil reactor which reacts shredded tyres and oil produce tyre oil, comprising:
(a) first inlet means for receiving shredded tyres;
(b) second inlet means for receiving oil;
(c) heating means for heating the inside of the reactor to a temperature sufficient to cause a reaction between the shredded tyres and the oil to produce tyre oil;
(d) separating means located within the reactor for separating unreacted components of the shredded tyres from the tyre oil;
(e) discharge means for discharging the tyre oil from the reactor; and
(f) removal means for removing the unreacted components from the reactor, which comprises
a substantially horizontal first conduit means affixed to the reactor;
a substantially vertical second conduit means connected to the first conduit means; characterized in that;
a first screw auger means, having a portion located within the reactor and the remaining portion within the first conduit means, for moving the unreacted components from the reactor through the first conduit to the second conduit;
a first motor means connected to the first screw auger means for driving the first screw auger means so as to remove unreacted components from the reactor;
a second screw auger means located within the second conduit means for preventing binding of the unreacted components exiting the first conduit means and for moving the unreacted components so as to discharge the unreacted components; and
a second motor means connected to the second screw auger means for driving the second screw auger means.

2. A reactor as described in Claim 1 wherein the separating means includes a pair of screens located within the chamber means at a predetermined angle with the vertical, and a bottom element connecting said screens to facilitate the movement of the unreacted components down the screens to the bottom element to be removed by the removal means while the tyre oil passes through the screens to the discharge means.

3. A reactor as described in Claim 2 wherein the screens are metal plates having holes of a predetermined diameter drilled in a predetermined arrangement so as to facilitate the passage of the tyre oil through the screens while preventing the unreacted components from passing through.

4. A tyre oil reaction method which reacts shredded tyres and oil to produce tyre oil comprising the steps of:
introducing shredded tyres into a reactor;
introducing oil into the reactor;
heating the inside of the reactor to a temperature sufficient to cause a reaction between the shredded tyres and the oil to produce tyre oil;
separating unreacted components of the shredded tyres from the tyre oil within the reactor;
discharging the tyre oil from the reactor; and characterized in that
removing the unreacted components from the reactor by using a first screw auger means in a substantially horizontal first conduit means to move the unreacted components from the reactor through the first conduit means and through a substantially vertical second conduit means connected to the first conduit means and containing a second screw auger means.

## Patentansprüche

1. Reifen-Öl-Reaktor, der zerkleinerte Reifen und Öl umsetzt, um Reifenöl zu erzeugen, mit:
(a) einer ersten Einlaßeinrichtung zum Aufnehmen von zerkleinerten Reifen;
(b) einer zweiten Einlaßeinrichtung zum Aufnehmen von Öl;
(c) einer Beheizungseinrichtung zum Beheizen des Innenraums des Reaktors auf eine ausreichende Temperatur, um eine Reaktion zwischen den zerkleinerten Reifen und dem Öl zu bewirken, um Reifenöl zu erzeugen;
(d) einer Abtrenneinrichtung, die sich innerhalb des Reaktors befindet, um unreagierte Komponenten der zerkleinerten Reifen aus dem Reifenöl abzutrennen;
(e) einer Abgabeeinrichtung zum Abgeben des Reifenöls aus dem Reaktor; und
(f) einer Entfernungseinrichtung zum Entfernen der unreagierten Komponenten aus dem Reaktor, welche umfaßt
eine im wesentlichen horizontale erste Leitungseinrichtung, die an dem Reaktor fixiert ist;
eine im wesentlichen vertikale, zweite Leitungseinrichung, die an die erste Leitungseinrichtung angeschlossen ist; gekennzeichnet durch:
eine erste Schraubeneinrichtung mit einem Abschnitt, der sich innerhalb des Reaktors befindet, wobei sich der übrige Abschnitt innerhalb der ersten Leitungseinrichtung befindet, zum Bewegen der unreagierten Komponenten aus dem Reaktor durch die erste Leitung zur zweiten Leitung;
eine erste Antriebseinrichtung, die mit der ersten Schraubeneinrichtung verbunden ist, um die
erste Schraubeneinrichtung so anzutreiben, daß unreagierte Komponenten aus dem Reaktor entfernt werden;
eine zweite Schraubeneinrichtung, die sich innerhalb der zweiten Leitungseinrichtung befindet, um ein Verbinden der unreagierten Komponenten, die die erste Leitungseinrichtung verlassen, zu verhindern, und um die unreagierten Komponenten zu bewegen, so daß die unreagierten Komponenten abgegeben werden; und
eine zweite Antnebseinnchtung, die mit der zweiten Schraubeneinrichtung verbunden ist, um die zweite Schraubeneinrichtung anzutreiben.

2. Reaktor nach Anspruch 1, dadurch gekennzeichnet, daß die Abtrenneinrichtung ein Paar Siebe enthält, die innerhalb der Kammereinrichtung unter einem vorbestimmten Winkel zur Vertikalen angeordnet sind, wobei ein Bodenelement die Siebe verbindet, um die Bewegung der unreagierten Komponenten an den Sieben herunter zum Bodenelement zu erleichtern, damit sie durch die Entfernungseinrichtung entfernt werden, während das Reifenöl durch die Siebe zur Abgabeeinrichtung geht.

3. Reaktor nach Anspruch 2, dadurch gekennzeichnet, daß die Siebe Metallplatten sind, die Löcher eines vorbestimmten Durchmessers aufweisen, die in einer vorbestimmten Anordnung gebohrt sind, um den Durchgang des Reifenöls durch die Siebe zu erleichtern, während die unreagierten Komponenten am Durchgang gehindert werden.

4. Reifen-Öl-Reaktionsverfahren, bei dem zerkleinerte Reifen und Öl umgesetzt werden, um Reifenöl zu erzeugen, mit den Schritten:
Einführen zerkleinerter Reifen in einen Reaktor;
Einführen von Öl in den Reaktor;
Erhitzen des Innenraums des Reaktors auf eine Temperatur, die ausreicht, um eine
Reaktion zwischen den zerkleinerten Reifen und dem Öl zu erzeugen, um Reifenöl herzustellen;
Abtrennen unreagierter Komponenten der zerkleinerten Reifen von dem Reifenöl innerhalb des Reaktors;
Abgeben des Reifenöls aus dem Reaktor; gekennzeichnet durch
Entfernen der unreagierten Komponenten aus dem Reaktor durch Verwenden
einer ersten Schraubeneinrichtung in einer im wesentlichen horizontalen ersten Leitungseinrichtung, um die unreagierten Komponenten aus dem Reaktor durch die erste Leitungseinrichtung und durch eine im wesentlichen vertikale, zweite Leitungseinrichtung, die an die erste Leitungseinrichtung angeschlossen ist und eine zweite Schraubeneinrichtung enthält, zu bewegen.

## Revendications

1. Réacteur huile/pneumatiques, qui fait réagir des pneumatiques réduits en morceaux et de l'huile pour produire de l'huile de pneumatique, comprenant :
(a) des premiers moyens d'admission pour la réception de pneumatiques réduits en morceaux ;
(b) des seconds moyens d'admission pour recevoir de l'huile ;
(c) des moyens de chauffage servant à chauffer l'intérieur du réacteur jusqu'à une température suffisante pour provoquer une réaction entre les pneumatiques réduits en morceaux et l'huile afin de produire de l'huile de pneumatique ;
(d) des moyens de séparation, situés à l'intérieur du réacteur pour séparer de l'huile de pneumatique des éléments des pneumatiques réduits en morceaux n'ayant pas réagi ;
(e) des moyens d'évacuation afin de faire sortir du réacteur l'huile de pneumatique ; et
(f) des moyens d'extraction pour retirer du réacteur les éléments n'ayant pas réagi, lesdits moyens comprenant :
un premier moyen formant conduit sensiblement horizontal, fixé au réacteur ;
un second moyen formant conduit sensiblement vertical, relié au premier moyen formant conduit ; caractérisé en ce que
un premier moyen formant vis tarière, dont une partie est située à l'intérieur du réacteur et dont la partie restante est à l'intérieur du premier moyen formant conduit, pour acheminer les éléments n'ayant pas réagi, à partir du réacteur, à travers le premier conduit jusqu'au second conduit ;
un premier moyen formant moteur, relié au premier moyen formant vis tarière, pour entraîner le premier moyen formant vis tarière de manière à retirer du réacteur les éléments n'ayant pas réagi ;
un second moyen formant vis tarière, situé à l'intérieur du second moyen formant conduit, pour empêcher l'agglomération des éléments n'ayant pas réagi, à la sortie du premier moyen formant conduit, et pour acheminer les éléments n'ayant pas réagi afin d'évacuer les éléments n'ayant pas réagi ; et
un second moyen formant moteur, relié au second moyen formant vis tarière, pour entraîner le second moyen formant vis tarière.

2. Réacteur selon la revendication 1, dans lequel les moyens de séparation comprennent une paire de tamis, placés à l'intérieur du moyen formant chambre suivant un angle prédéterminé par rapport à la verticale, et un élément formant fond reliant lesdits tamis pour faciliter le déplacement des éléments n'ayant pas réagi le long des tamis jusqu'à l'élément formant fond, pour être extraits par les moyens d'extraction tandis que l'huile traverse les tamis pour arriver jusqu'aux moyens d'évacuation.

3. Réacteur selon la revendication 2, dans lequel les tamis sont des plaques métalliques comportant des trous d'un diamètre prédéterminé et percés selon une disposition prédéterminée de manière à faciliter le passage de l'huile de pneumatique à travers les tamis tout en empêchant le passage des éléments n'ayant pas réagi.

4. Procédé de réaction huile/pneumatiques, qui fait réagir des pneumatiques réduits en morceaux et de l'huile pour produire de l'huile de pneumatique, comprenant les étapes suivantes :
introduction de pneumatiques réduits en morceaux, dans un réacteur ;
introduction d'huile dans le réacteur ;
chauffage de l'intérieur du réacteur jusqu'à une température suffisante pour provoquer une réaction entre les pneumatiques réduits en morceaux et l'huile afin de produire de l'huile de pneumatique ;
séparation des éléments des pneumatiques réduits en morceaux n'ayant pas réagi et de l'huile de pneumatique à l'intérieur du réacteur ;
évacuation de l'huile de pneumatique hors du réacteur ; et caractérisé par
l'extraction des éléments n'ayant pas réagi à partir du réacteur en utilisant un premier moyen formant vis tarière situé dans un premier moyen formant conduit sensiblement horizontal, pour acheminer les éléments n'ayant pas réagi, à partir du réacteur, à travers le premier moyen formant conduit et à travers un second moyen formant conduit sensiblement vertical, relié au premier moyen formant conduit, et contenant un second moyen formant vis tarière.
